# EUROPÄISCHE PATENTSCHRIFT

(11) **EP 2 584 281 B1**
(45) Veröffentlichungstag und Bekanntmachung des Hinweises auf die Patenterteilung: **04.10.2017**
(21) Anmeldenummer: 12188370.6
(22) Anmeldetag: 12.10.2012
(51) Int. Cl.: F24H 9/12, F16K 31/122, F16K 17/00

(54) **Warmwasserspeicher und Druckeinrichtung**
Hot water tank and pressure device
Accumulateur d'eau chaude et dispositif de pression

(30) Priorität: 20.10.2011 DE 102011084866
(43) Veröffentlichungstag der Anmeldung: 24.04.2013
(73) Patentinhaber: BSH Hausgeräte GmbH, 81739 München (DE)
(72) Erfinder: Burghardt, Stefan, 83253 Rimsting (DE); Englisch, Christian, 83324 Ruhpolding (DE)

(56) Entgegenhaltungen:
- EP-A1- 0 916 909
- WO-A1-99/51902
- DE-A1- 2 631 319
- DE-C- 960 942

## Beschreibung

Die Erfindung betrifft einen Warmwasserspeicher, insbesondere einen offenen Warmwasserspeicher, zur Bereitstellung von Warmwasser nach dem Oberbegriff des Patentanspruchs 1.

Beim Betrieb von offenen Warmwasserspeichern besteht häufig das Problem, dass nach längerem Betrieb eine Verkalkung auftritt. Die Verkalkung zeigt sich insbesondere in den Gerätebereichen, die mit dem erwärmten Kaltwasser bzw. mit dem Warmwasser in Kontakt kommen. Je nach dem Grad der Verkalkung kann nur noch eine stark begrenzte Warmwassermenge durch einen Tankauslauf abfließen. Hierdurch kann sich in dem Warmwasserspeicher ein erhöhter Systemdruck aufbauen, der bei offenen Warmwasserspeichern, die häufig aufgrund der Verwendung von Kunststofftanks mit einer begrenzten Druckfestigkeit ausgeführt sind, zu einem Platzen bzw. Bersten führen kann. Durch das Platzen des Wassertanks tritt wiederum Warmwasser aus, wodurch ein Wasserschaden entsteht.

Ferner besteht bei einer Neuinstallation eines offenen Warmwasserspeichers grundsätzlich die Gefahr eines Falschanschlusses. Bei einem Falschanschluss wird der Warmwasserspeicher anstatt mit einer speziellen für drucklose Warmwasserspeicher ausgelegten Armatur mit einer normalen Armatur montiert, was dazu führen kann, dass der Wassertank mit einem Leitungsdruck beaufschlagt wird und ebenfalls berstet. Druckschriftlicher Stand der Technik gemäß dem Oberbegriff des Patentanspruchs 1 ist aus der Patentschrift DE 960 942 C2 bekannt.

Diese Patentschrift zeigt eine Boilersicherheits-Armaturengruppe mit einem Überdrucksicherheitsventil und einem vorgeschalteten Rückschlagventil. Das Rückschlagventil ist mit einem Druckminderventil kombiniert, in dem ein Verschlussstück des Rückschlagventils bei steigendem Druck im Boiler von einer Membran kraftschlüssig in Schließrichtung gedrückt wird, die einerseits vom Druck im Boiler, andererseits von der freien Atmosphäre beaufschlagt und von einer im Öffnungsinnern wirkenden Feder belastet ist. Weiterer Stand der Technik ist aus der DE 26 31 319 A1, WO 99/51902 A1 und aus der EP 0 916 909 A1 bekannt.

Aufgabe der Erfindung ist es, einen Warmwasserspeicher, insbesondere einen offenen Warmwasserspeicher, zur Bereitstellung von Warmwasser zu schaffen, der die vorgenannten Nachteile beseitigt und bei dem die Gefahr eines Berstens verhindert ist.

Diese Aufgabe wird gelöst durch einen Warmwasserspeicher mit den Merkmalen des Patentanspruchs 1. Vorteilhafte Aus- und Weiterbildungen, welche einzeln oder in Kombination miteinander einsetzbar sind, sind Gegenstand der jeweils abhängigen Ansprüche.

Ein erfindungsgemäßer Warmwasserspeicher, insbesondere ein offener Warmwasserspeicher, zur Bereitstellung von Warmwasser hat einen Tank zur Speicherung des Warmwassers, einen Zulauf zur Zuführung von Kaltwasser in den Tank und einen Auslauf zur Entnahme des Warmwassers aus dem Tank. Zwischen dem Zulauf und dem Tank ist eine Druckeinrichtung angeordnet, die beim Erreichen eines eingestellten Wertes eines tankseitigen Systemdruckes den Zulauf selbsttätig zusteuert. Die Druckeinrichtung verhindert durch die selbsttätige Zusteuerung ab einem bestimmten Systemdruck einen Überdruck in dem Tank, so dass ein Bersten desselben wirkungsvoll verhindert wird. Somit werden sowohl erhöhte Überdrücke in Folge von Verkalkungen oder als auch in Folge von Falschanschlüssen verhindert. Folglich kann das Warmwasser nicht unkontrolliert aus dem Tank auslaufen und ein Wasserschaden wird verhindert. Der Warmwasserspeicher ist besonders robust dadurch ausgeführt, dass die Druckeinrichtung einen in Öffnungsstellung federvorgespannten Kolben hat, der in Schließstellung mit dem Ausgangsdruck beaufschlagt ist. Eine derartige Druckeinrichtung ist aufgrund des Fehlens von elektrischen, magnetischen oder elektromagnetischen Betätigungseinheiten sehr wartungsarm, störunanfällig, einfach zu montieren und zu demontieren. Zudem lässt sich eine derartig autarke Druckeinrichtung bequem als Nachrüstelement in bestehende Warmwasserspeicher integrieren. Die Robustheit des Warmwasserspeichers ist dadurch erhöht, dass die Druckeinrichtung eine minimale Anzahl von bewegbaren Teilen aufweist. Hierzu ist lediglich der Kolben bewegbar in der Druckeinrichtung geführt. Dies ist erfindungsgemäß dadurch realisiert, dass der Kolben einen Durchgangsabschnitt hat, der sich in der Öffnungsstellung zumindest abschnittsweise in Überdeckung mit dem Zulauf und mit der Tankleitung befindet und der sich in Schließstellung zumindest abschnittsweise in Überdeckung mit der Entlastungsleitung und mit der Tankleitung befindet.

Um einen Betrieb des Warmwasserspeichers trotz des erhöhten Systemdruckes im eingeschränkten Umfang zu ermöglichen, sieht ein Ausführungsbeispiel vor, dass die Druckeinrichtung nach einer selbsttätigen Druckentlastung unter den eingestellten Wert den Zulauf selbsttätig aufsteuert. Eine sofortige Abschaltung des Warmwasserspeichers durch die abwechselnde Aufsteuerung bzw. Zusteuerung des Zulaufs und der Druckentlastung wird somit verhindert. Das Eingreifen der Druckeinrichtung und somit der erhöhte Systemdruck wird von einem Endverbraucher bei gleicher Armaturstellung als eine reduziert entnehmbare Warmwassermenge wahrgenommen, so dass der Endverbraucher Gegenmaßnahmen wie eine Entkalkung einleiten kann.

Um bei der Druckentlastung zu verhindern, dass die abgeführte Wassermenge einen Wasserschaden verursacht, ist die Druckeinrichtung mit einer Entlastungsleitung zur Abführung der bei der Druckentlastung entnommenen Wassermenge verbunden.

Das Ansprechverhalten der Druckeinrichtung ist dadurch optimiert, dass der Kolben einen Federraum von einem Druckraum trennt, in dem eine Steuerleitung mündet, die sich von einer zum Tank führenden Tankleitung erstreckt. Durch diese Ausbildung wird der Systemdruck auf eine von dem Federraum abgewandte Kolbenfläche geführt und dieser somit quasi verzögerungsfrei mit einer in Schließstellung weisenden Schließkraft beaufschlagt.

Der Durchgangsabschnitt kann beispielsweise eine Außenumfangsnut aufweisen. Eine Umfangsnut lässt sich fertigungstechnisch einfach in den Kolben einbringen und genau dimensionieren. Alternativ kann der Durchgangsabschnitt eine Durchgangsbohrung und dgl. sein.

Bevorzugterweise hat die Druckeinrichtung im Bereich der Tankleitung eine ihren Innenraum vergrößernde Erweiterungskammer. Durch die Erweiterungskammer wird quasi ein Mündungsbereich der Tankleitung vergrößert, so dass die Tankleitung herkömmlicher Art sein kann, was insbesondere die Montage und Nachrüstung erleichtert.

Die Erfindung eignet sich zur Bereitstellung eines robusten offenen Warmwasserspeichers im Bereich der Hausgerätetechnik, der verlässlich gegen einen erhöhten Systemdruck und somit gegen ein Bersten seines Tanks oder seiner Wasserleitungen geschützt ist.

Im Folgenden werden bevorzugte Ausführungsbeispiele der Erfindung anhand schematischer Darstellungen näher erläutert. Es zeigen:
- Figur 1: einen Bereich eines erfindungsgemäßen offenen Warmwasserspeichers mit einer bevorzugten Druckeinrichtung in Öffnungsstellung, und
- Figur 2: die Druckeinrichtung aus Figur 1 in Schließstellung.

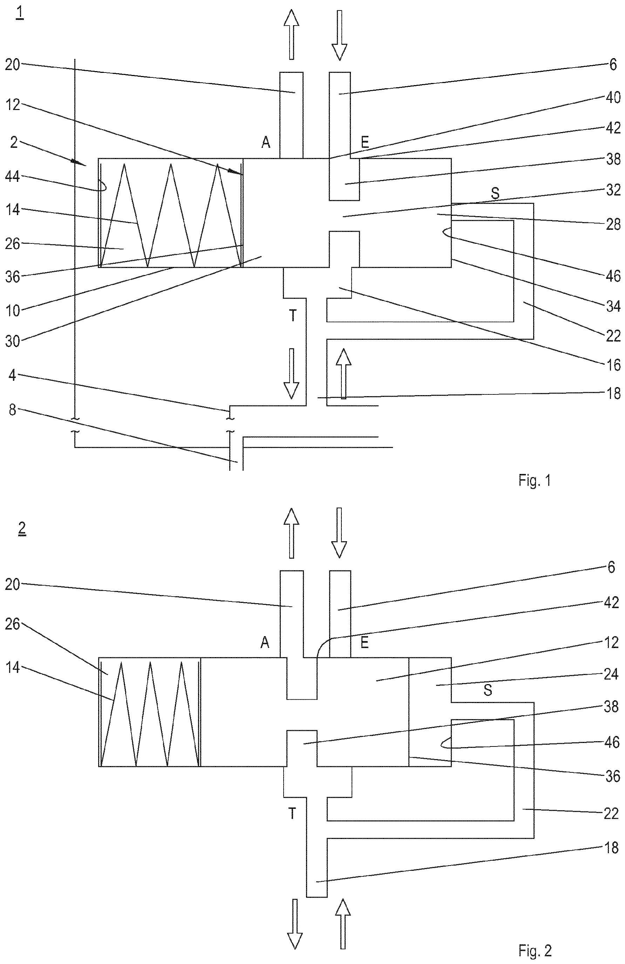

In Figur 1 ist ein Bereich eines erfindungsgemäßen offenen Warmwasserspeichers 1 mit einer bevorzugten Druckeinrichtung 2 in Öffnungsstellung bzw. Grundstellung gezeigt. Zur Erleichterung der folgenden Bezifferung ist die Druckeinrichtung 2 wesentlich vergrößert dargestellt. Der Warmwasserspeicher 1 dient zur Bereitstellung von Warmwasser und ist in Unter- oder Obertischbauweise installierbar. Er hat einen angedeuteten Tank 4 zur Speicherung des Warmwassers, einen Zulauf 6 zur Zuführung von Kaltwasser zum Tank 4, einen Auslauf 8 zur Entnahme des Warmwassers, eine nicht gezeigte Heizeinheit zur Erwärmung des Kaltwassers in dem Tank 4 sowie eine nicht gezeigte Steuer- und Regelungseinheit.

Die Druckeinrichtung 2 hat die Aufgabe, einen tankseitigen bzw. von der Druckeinrichtung 2 aus betrachtet stromabwärtigen Systemdruck in dem Warmwasserspeicher 1, insbesondere innerhalb des Tanks 4 und in dem Auslauf 8 nicht über einen eingestellten Wert ansteigen zu lassen. Zudem dient die Druckeinrichtung 2 zur Druckentlastung der stromabwärtigen wasserführenden Elemente bei einem Systemdruck über den eingestellten Wert. Sie ist in dem Warmwasserspeicher 1 zwischen dem Zulauf 6 und dem Tank 4 integriert und hat ein Gehäuse 10, einen Kolben 12 sowie ein Federelement 14.

Das Gehäuse 10 begrenzt einen nicht bezifferten Innenraum zur Aufnahme des Kolbens 12. Es hat einen seitlichen Eingangsanschluss E, einen seitlichen Arbeitsanschluss T, einen seitlichen Ausgangsanschluss A sowie einen stirnseitigen Steueranschluss S. Im Bereich des Arbeitsanschlusses T ist eine den Innenraum radial vergrößernde Erweiterungskammer 16 ausgebildet, wodurch der Arbeitsanschluss T quasi gegenüber dem Eingangsanschluss B und dem Ausgangsanschluss A quasi erweitert ist. Der Eingangsanschluss E ist mit dem Zulauf 6 verbunden. Der Arbeitsanschlusses T ist mit einer sich zum Tank erstreckenden Tankleitung 18 verbunden. An den Ausgangsanschluss A ist eine Entlastungsleitung 20 zur Abführung einer Wassermenge bei einer Druckentlastung angebunden. An den Steueranschluss S ist eine Steuerleitung 22 angebunden, die sich von der Tankleitung 18 erstreckt. Die Steuerleitung 22 dient zur Leitung des Systemdrucks in einen in Figur 2 gezeigten Druckraum 24 und somit zum Kolben 12, so dass dieser mit einer hydraulischen Schließkraft beaufschlagt und aus seiner in Figur 1 gezeigten Öffnungsstellung in eine in Figur 2 gezeigte Schließstellung bzw. Arbeitsstellung überführbar ist. Der Zulauf 6, die Tankleitung 18, die Entlastungsleitung 20 und die Steuerleitung 22 können als einzelne Bauteile mit der Druckeinrichtung 2 verbunden werden oder, wie bevorzugt, integrale Bestandteile der Druckeinrichtung 2 bilden.

Der Kolben 12 ist axial verschiebbar in dem Innenraum geführt und unterteilt diesen in den Druckraum 24 und in einen Federraum 26. Er dient zur Auf- und Zusteuerung des Zulaufs 6 und der Entlastungsleitung 20. Er hat eine hantelförmige Gestalt mit zwei Endabschnitten 28, 30, die über einen querschnittsreduzierten Körperabschnitt 32 voneinander beabstandet sind. Die Endabschnitte 28, 30 haben einen gleichen Außendurchmesser und somit zwei gleich große voneinander abgewandte Stirnflächen 34, 36, von denen die eine (34) den Druckraum 22 und die (36) andere den Federraum 26 begrenzt. Der querschnittsreduzierte Körperabschnitt 32 wird beispielsweise über die Einbringung einer Umfangsnut 38 in den Kolben 12 gebildet. Zum Auf- und Zusteuern des Zulaufs 6 sowie der Entlastungsleitung 20 hat der Kolben 12 im Bereich der Umfangsnut 38 zwei gegenüberliegende Steuerkanten 40, 42.

Gehäuseseitige und/oder kolbenseitige Dichtungen zur Abdichtung des Druckraums 24 gegenüber dem Zulauf 6 und der Erweiterungskammer 16, zur Abdichtung des Federraums 26 gegenüber der Entlastungsleitung 20 und der Erweiterungskammer 16 sowie zur Abdichtung des Zulaufs 6 gegenüber der Entlastungsleitung 16 sind nicht gezeigt.

Das Federelement 14 ist in dem Federraum 26 angeordnet und vorzugsweise eine Spiralfeder. Es dient zur Aufbringung einer Öffnungskraft und somit zur Überführung des Kolbens 12 in die Öffnungsstellung, in der der Zulauf 6 und die Tankleitung 18 bzw. der Eingangsanschluss E und der Arbeitsanschluss T aufgesteuert sind. Das Federelement 14 stützt sich mit einem Fußabschnitt an einer den Federraum 26 begrenzenden und der Stirnfläche 36 gegenüberliegenden axialen Gehäusefläche 44 ab und greift mit einem Kopfabschnitt an der Stirnfläche 36 an. Die Öffnungs- bzw. Federkraft wird in Abhängigkeit von der Größe der den Druckraum 24 begrenzenden Stirnfläche 36 und in Abhängigkeit des Systemdruckwertes eingestellt, der nicht überschritten werden darf.

Im Folgenden wird die Funktionsweise der Druckeinrichtung 2 erläutert:
Bei einem Systemdruck bzw. Ausgangsdruck unter dem eingestellten Wert ist die Öffnungskraft der Feder 14 größer als die hydraulische Schließkraft. Der Kolben 12 befindet sich in der Öffnungsstellung (Figur 1). Zur Definierung der Öffnungsstellung liegt der Kolben 12 mit seiner Stirnfläche 34 flächig an einer axialen Gehäusefläche 46 an, wodurch der Druckraum 24 minimiert ist. Der Zulauf 6 sowie die Tankleitung 18 sind aufgesteuert. Die Entlastungsleitung 20 ist über die Steuerkante 40 zugesteuert. Somit strömt das Kaltwasser über den Zulauf 6, die Umfangsnut 38 sowie die Tankleitung 18 in den Tank 4 ein.

Bei einem Systemdruck ab dem eingestellten Wert übersteigt die hydraulische Schließkraft die Öffnungskraft, so dass der Kolben 12 gemäß der Darstellung nach Figur 2 aus seiner Öffnungsstellung nach links in seine Schließstellung überführt wird. Der Druckraum 24 vergrößert sich und der Federraum 26 wird entsprechend verkleinert. Das Federelement 14 wird gestaucht. Der Zulauf 6 ist nun über die Steuerkante 42 zugesteuert. Gleichzeitig sind die Entlastungsleitung 20 sowie die Tankleitung 18 aufgesteuert. Der Tank 4 kann nun über die Tankleitung 18, die Umfangsnut 38 sowie die Entlastungsleitung 20 druckentlastet werden.

Als Folge der Druckentlastung sinkt der Systemdruck unter den eingestellten Wert und der Kolben 12 wird mittels der Öffnungskraft des Federelementes 14 zurück in seine Öffnungsstellung überführt. Der Tank 4 wird wieder mit dem Zulauf 6 verbunden und in den Tank 4 strömt Kaltwasser nach. Beim Überschreiten des eingestellten Systemdruckwerts wird jedoch wieder der Kolben 12 aus seiner Öffnungsstellung in seine Schließstellung überführt und dann eine Druckentlastung des Warmwasserspeichers 1 durchgeführt. Der Kolben 12 steuert somit alternierend den Zulauf 6 und die Entlastungsleitung 16 zumindest abschnittsweise auf bzw. zu, wobei stets die Tankleitung 18 über ihren gesamten Durchflussquerschnitt geöffnet ist.

### Bezugszeichenliste

- 1: Warmwasserspeicher
- 2: Druckeinrichtung
- 4: Tank
- 6: Zulauf
- 8: Auslauf
- 10: Gehäuse
- 12: Kolben
- 14: Federelement
- 16: Erweiterungskammer
- 18: Tankleitung
- 20: Entlastungsleitung
- 22: Steuerleitung
- 24: Druckraum
- 26: Federraum
- 28: Endabschnitt
- 30: Endabschnitt
- 32: Körperabschnitt
- 34: Stirnfläche
- 36: Stirnfläche
- 38: Umfangsnut
- 40: Steuerkante
- 42: Steuerkante
- 44: Gehäusefläche
- 46: Gehäusefläche

- E: Eingangsanschluss
- A: Ausgangsanschluss
- T: Arbeitsanschluss
- S: Steueranschluss

## Patentansprüche

1. Warmwasserspeicher (1), insbesondere ein offener Warmwasserspeicher, zur Bereitstellung von Warmwasser, mit einem Tank (4) zur Speicherung des Warmwassers, mit einem Zulauf (6) zur Zuführung von Kaltwasser in den Tank (4) und mit einem Auslauf (8) zur Entnahme des Warmwassers aus dem Tank (4), mit einer zwischen dem Zulauf (6) und dem Tank (4) angeordneten Druckeinrichtung (2), die beim Erreichen eines eingestellten Wertes eines tankseitigen Systemdrucks den Zulauf (6) selbsttätig zusteuert, wobei die Druckeinrichtung (2) mit einer Entlastungsleitung (20) zur Abführung einer Wassermenge bei einer Druckentlastung verbunden ist, wobei die Druckeinrichtung (2) einen in Öffnungsstellung federvorgespannten Kolben (12) hat, der in Schließstellung mit dem Systemdruck beaufschlagt ist, wobei der Kolben (12) einen Federraum (26) von einem Druckraum (24) trennt, in den eine Steuerleitung (22) mündet, die sich von einer zum Tank (4) führenden Tankleitung (18) erstreckt, **dadurch gekennzeichnet, dass** der Kolben (12) einen Durchgangsabschnitt (38) hat, der sich in der Öffnungsstellung zumindest abschnittsweise in Überdeckung mit dem Zulauf (6) und mit der Tankleitung (18) befindet und der sich in Schließstellung zumindest abschnittsweise in Überdeckung mit der Entlastungsleitung (20) und mit der Tankleitung (18) befindet.

2. Warmwasserspeicher nach Anspruch 1, wobei die Druckeinrichtung (2) nach einer selbsttätigen Druckentlastung unter den eingestellten Wert den Zulauf (6) selbststätig aufsteuert.

3. Warmwasserspeicher nach Anspruch 1, wobei der Durchgangsabschnitt (38) eine Umfangsnut ist.

4. Warmwasserspeicher nach einem der vorhergehenden Ansprüche, wobei die Druckeinrichtung (2) im Bereich der Tankleitung (18) eine ihren Innenraum vergrößernde Erweiterungskammer (16) hat.

## Claims

1. Hot water tank (1), in particular an open hot water tank, for providing hot water, having a tank (4) for storing the hot water, having an inlet (6) for feeding cold water into the tank (4) and having an outlet (8) for drawing the hot water from the tank (4), having a pressure device (2) arranged between the inlet (6) and the tank (4), said pressure device (2) automatically closing the inlet (6) when a set value of a tank-side system pressure is reached, wherein the pressure device (2) is connected to a relief line (20) for discharging a quantity of water during pressure relief, wherein the pressure device (2) has a piston (12) that is pretensioned into the open position by a spring and is subjected to the system pressure in the closed position, wherein the piston (12) divides a spring chamber (26) from a pressure chamber (24) into which a control line (22) leads which extends from a tank line (18) leading to the tank (4), **characterized in that** the piston (12) has a through-passage portion (38) which at least partially overlaps the inlet (6) and the tank line (18) in the open position and which at least partially overlaps the relief line (20) and the tank line (18) in the closed position.

2. Hot water tank according to Claim 1, wherein the pressure device (2) automatically opens the inlet (6) following automatic pressure relief to below the set value.

3. Hot water tank according to Claim 1, wherein the through-passage portion (38) is a circumferential groove.

4. Hot water tank according to one of the preceding claims, wherein the pressure device (2) has an expansion chamber (16) that enlarges the interior thereof in the region of the tank line (18).

## Revendications

1. Accumulateur d'eau chaude (1), en particulier accumulateur d'eau chaude ouvert, pour la fourniture d'eau chaude, avec un réservoir (4) pour accumuler l'eau chaude, avec une arrivée (6) pour amener de l'eau froide dans le réservoir (4) et avec une sortie (8) pour prélever de l'eau chaude hors du réservoir (4), avec un dispositif de pression (2) disposé entre l'arrivée (6) et le réservoir (4), qui ferme automatiquement l'arrivée (6) lorsqu'une valeur réglée d'une pression du système dans le réservoir est atteinte, dans lequel le dispositif de pression (2) est relié à une conduite de décharge (20) pour évacuer une quantité d'eau lors d'une détente de pression, dans lequel le dispositif de pression (2) comporte un piston précontraint par un ressort (12) dans une position ouverte, qui est soumis à la pression du système en position fermée, dans lequel le piston (12) sépare une chambre de ressort (26) d'une chambre de pression (24), dans laquelle débouche une conduite de commande (22) qui s'étend à partir d'une conduite de réservoir (18) menant au réservoir (4), **caractérisé en ce que** le piston (12) présente une partie de passage (38), qui se trouve dans la position ouverte au moins en partie en recouvrement avec l'arrivée (6) et avec la conduite de réservoir (18) et qui se trouve dans la position fermée au moins en partie en recouvrement avec la conduite de décharge (20) et avec la conduite de réservoir (18).

2. Accumulateur d'eau chaude selon la revendication 1, dans lequel le dispositif de pression (2) ouvre automatiquement l'arrivée (6) après une détente de pression automatique en dessous de la valeur réglée.

3. Accumulateur d'eau chaude selon la revendication 1, dans lequel la partie de passage (38) est une gorge périphérique.

4. Accumulateur d'eau chaude selon l'une quelconque des revendications précédentes, dans lequel le dispositif de pression (2) comporte dans la région de la conduite de réservoir (18) une chambre élargie (16) augmentant son espace intérieur.
